# EUROPEAN PATENT APPLICATION

(11) **EP 0 813 100 A2**
(43) Date of publication of application: **17.12.1997**
(21) Application number: 97108993.3
(22) Date of filing: 04.06.1997
(51) Int. Cl.: G03B 17/02, G03B 17/26

(54) **Photographic camera and film cartridge**

(30) Priority: 10.06.1996 DE 19623066
(71) Applicant: EASTMAN KODAK COMPANY, Rochester, New York 14650 (US)
(72) Inventor: Reibl, Michael, 71032 Boeblingen (DE)
(74) Representative: Lewandowsky, Klaus, Dipl.-Ing.

(57) **Abstract**

The invention relates to a photographic camera of small, flat design, consisting of a body shell (12), a taking lens (14), a viewfinder (15), a film chamber (10), film transport means (76), and a flash device (16).

The body shell (12) is configured parallelepipedally and has on its front side a linear flat guideway (17) in which a lens slide (18) is guided displaceably from a non-operating position into a taking position and for purposes of film transport. For this purpose the body shell (12) is equipped on the back side with a linear flat guideway (23), and the film chamber is configured as a replaceable film cassette (10) that is displaceably guided in the flat guideway (23).

The film cassette serves to receive a film strip equipped with an edge perforation, and consists of a flat, parallelepipedal housing with an exposure window and a film mouth. There extends in the housing (20), in the longitudinal direction thereof, a circumferential and continuous film channel (21) which passes by the exposure window (24) and opens into the film mouth (44).

## Description

The invention relates to a photographic camera of small, flat design, consisting of a body shell, a taking lens, a viewfinder, a film chamber, film transport means, and a flash device.

In the field of photographic cameras there is a clear trend toward the construction of small, high-performance cameras. In known cameras of this kind, the film to be exposed is accommodated as film strips lying flat in flat cassettes. The small number of frames that can be accommodated on the film strips must be regarded as a disadvantage. This can be improved with the use of the "half-frame" format, i.e. a dimension of 24 x 18 mm per frame for a 135 film format, but still remains unsatisfactory.

A camera of this kind is known from DE-OS 30 19 307. This document discloses a photographic camera with a lens, an image stage, and a rear cover, for use of a flat, pocket-like film cassette which contains a light-sensitive film strip, suitable for taking a plurality of pictures, that can be moved out of and into the cassette through a film mouth provided on one narrow side of the cassette.

A cassette space is provided between the camera rear cover and a cassette support configured on a camera body shell. A film receiving space is arranged parallel to this, between the surface of the camera body shell parallel to the cassette support and a wall of the camera housing lying opposite to the camera rear cover and comprising the lens and image stage. The film transport means are mounted on the camera body in the region of the extension of the cassette supports. They are configured as a perforation gear with two rows of teeth.

It is the object of the invention to create a camera of the generic type that is of simple design and easy to operate, operates reliably, and despite its small dimensions can accept a film strip of sufficient length for a larger number of frames.

According to the invention, this is achieved in that the body shell is configured parallelepipedally and has on its front side a linear flat guideway in which a lens slide is guided displaceably from a non-operating position into a taking position and for purposes of film transport; and that the film chamber is arranged on the back side of the body shell.

In a preferred embodiment, the body shell also has a linear flat guideway on the back side, and the film chamber is configured as a replaceable cassette that is displaceably guided in the flat guideway.

The lens slide, which is displaceable from the non-operating position into the taking position, can be snap-locked into the latter, and in this taking position the viewfinder is uncovered and the lens is in its taking position.

Lastly, a lens carrier receiving the lens is guided in the lens slide perpendicular to the movement direction of the lens slide, and is movable from a non-operating position into a taking position and vice versa.

In a particularly advantageous embodiment, a film cassette is provided for the photographic camera in question to receive a film strip equipped with an edge perforation, and consists of a flat, parallelepipedal housing with an exposure window and a film mouth, and is characterized in that configured in the housing is a circumferential, continuous film channel extending in the longitudinal direction thereof, which passes by the exposure window and opens into the film mouth.

Further features and advantages are evident from the description of an embodiment of the invention and from the subclaims. In the drawings
- Fig. 1: shows the camera according to the invention, not ready to operate, in a front view;
- Fig. 2: shows the camera according to Fig. 1 in a side view;
- Fig. 3: shows the camera according to Fig. 1 in a plan view;
- Fig. 4: shows the camera according to Fig. 1, ready to operate, in a front view;
- Fig. 5: shows the camera according to Fig. 4 in a side view;
- Fig. 6: shows the film cassette according to the invention for the camera according to Fig. 1, in section;
- Fig. 7: shows the film cassette according to Fig. 6 with the film strip in place, in section;
- Fig. 8: shows the camera according to Fig. 4 with the front wall removed, in an enlarged depiction in a front view;

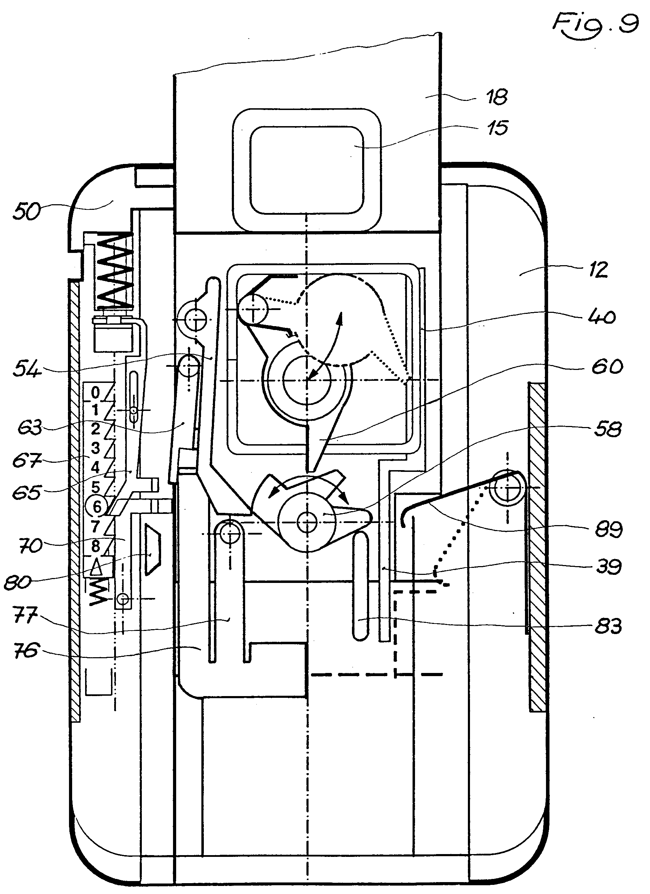

- Fig. 9: shows the camera according to Fig. 4 with the front wall removed, after an exposure operation, in an enlarged depiction in a front view;
- Fig. 10: shows the camera according to Fig. 4 in an enlarged depiction in a side view in section;
- Fig. 11: shows the camera according to Fig. 1 in an enlarged depiction in partial section;
- Fig. 12: shows the camera according to Fig. 11 in a plan view in section;

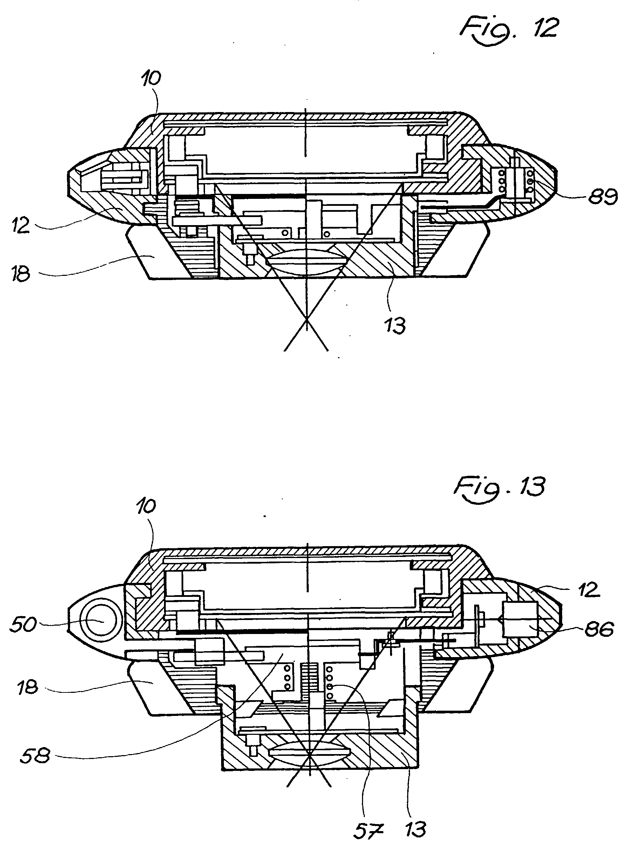

- Fig. 13: shows the camera according to Fig. 10 in a plan view in section;
- Fig. 14: shows a detail of the camera according to Fig. 1 in an enlarged depiction in section; and
- Fig. 15: shows a detail of the camera according to Fig. 1 in an enlarged depiction in section.

Subminiature camera 11 illustrated in the drawings consists of a flat body shell 12 on whose front side a lens slide 18 with a lens carrier 13 is slidable in a flat guideway 17 from a non-operating position into a taking position. A lens 14 is set into lens carrier 13. A viewfinder 15 and a flash arrangement 16 are provided in lens slide 18. Lens carrier 13 is pretensioned in lens slide 18, by means of a return spring 19, against a housing-side ramp 39 and a support surface 40.

On the back side of subminiature camera 11, film cassette 10 is guided, again by means of a flat guideway 23, in body shell 12 so as to slide in and out, and is held in its end positions. The configuration of film cassette 10 will be described in further detail following the description of the construction of the camera.

On the right side of camera 11, a release button 50 is guided longitudinally displaceably parallel to lens slide 18 against the force of a return spring 51. Release button 50 engages with a projection 52 on one arm 53 of a two-armed release pawl 54 mounted pivotedly in lens slide 18, when lens slide 18 is in its taking position. The other arm 55 of release pawl 54 is braced against a surface 56 of an impact lever 58 that is preloaded by a drive spring 57. Impact lever 58 rests with an impact arm 59 against a shutter blade 60 that is held, under the preload of a torsion spring 61, in its closed position in front of lens 14. The impact lever has a cam 62 whose purpose will be described later.

A retaining lever 63, which is braced elastically on arm 55 by means of a lobe 64, is mounted pivotedly in lens slide 18 parallel to arm 55 of release pawl 54.

Also mounted on release button 50 is a counter lever 65, which is guided displaceably in body shell 12 in a pin-and-oblong-hole guide and engages in spring-loaded fashion, with a pawl 66 configured at its free end, into the teeth of a counter bar 67. In the exemplified embodiment, counter bar 67 is designed with eight teeth for eight photographic images, and equipped accordingly with the digits 8 to 1 to count the remaining pictures. A stop 68 delimits movement after the eighth picture is taken, and a compression spring returns counter bar 67 to its zero position. A hook 74, provided on counter lever 65 and interacting with a gate 80 on film cassette 10, serves to disengage the latter from the teeth of counter bar 67 when film cassette 10 is changed.

In addition, a detent pawl 70, which on the one hand engages with a pawl-shaped lug 71 into the teeth of counter bar 67 and on the other hand lies with an end surface 72 at a short distance opposite the side surface of lens slide 18, is mounted pivotedly in body shell 12. With lens slide 18 in either the non-operating or the taking position, there is thus located opposite end surface 72 a cutout 93 or 73 present in the side surface thereof, into which end surface 72 penetrates when film cassette 10 is changed. For this purpose, a hook 75 which cooperates with gate 80 on film cassette 10 is also provided on detent pawl 70.

Furthermore a film gripper 76, which engages by means of a spring arm 77 and a snap ball 78 arranged at its free end into a snap recess 79 configured on lens slide 18, is guided so as to be displaced longitudinally with lens slide 18 in body shell 12. This engagement persists so long as lens slide 18 is moved only for the purpose of film transport after a picture has been taken. Only when lens slide 18 is slid back into its non-operating position does this snap connection 78/79 release and film gripper 76 remain in a position in which film gripper 76 comes into contact with its gripper tooth 81 against a stop shoulder 82 configured in film cassette 10.

A stop 83 that, for purposes of shutter cocking, interacts with cam 62 of impact lever 58, is provided in body shell 12. This cam 62 additionally actuates flash arrangement 16 when the camera is triggered. For this purpose, after release button 50 is pressed down, cam 82 strikes a retaining pawl 84 which releases a firing spring 85 that strikes a piezo block 86. A flash lamp is fired via electrical lines 87 that end in a socket 88 of flash arrangement 16.

Lastly, a leg spring 89, that rests with one leg against body shell 12 and with the other leg, whose end is paddle-shaped, under spring preload against the side wall of lens slide 18 in its non-operating position, is arranged in body shell 12. Configured on lens slide 18 and lying transverse to its movement direction is a shoulder 90 against which leg spring 89 rests with its paddle-shaped end when lens slide 18 is displaced into its taking position, and assists that displacement. In the taking position, leg spring 89 secures the position of lens slide 18.

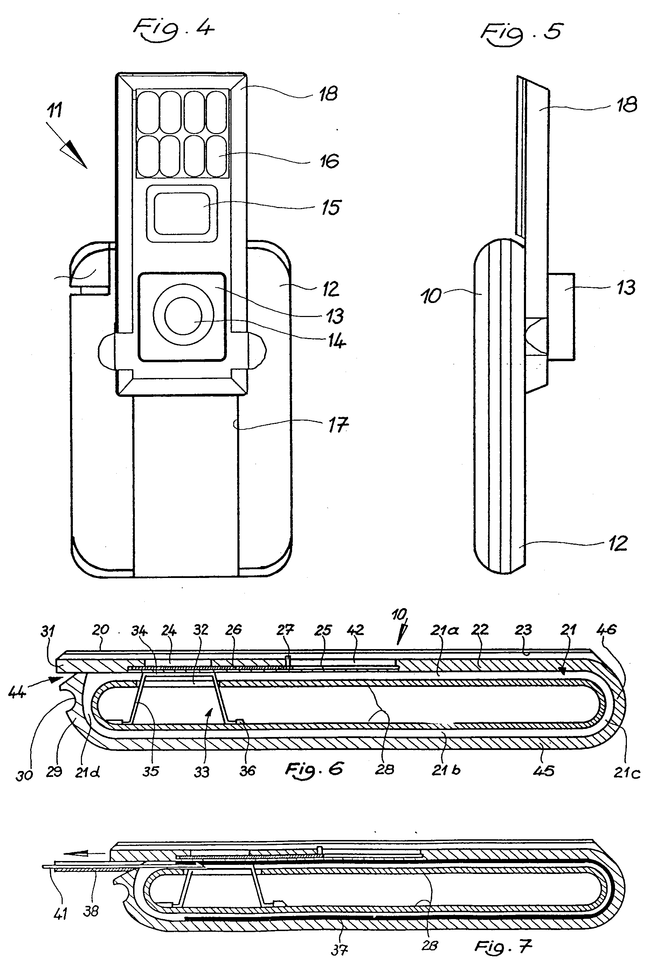

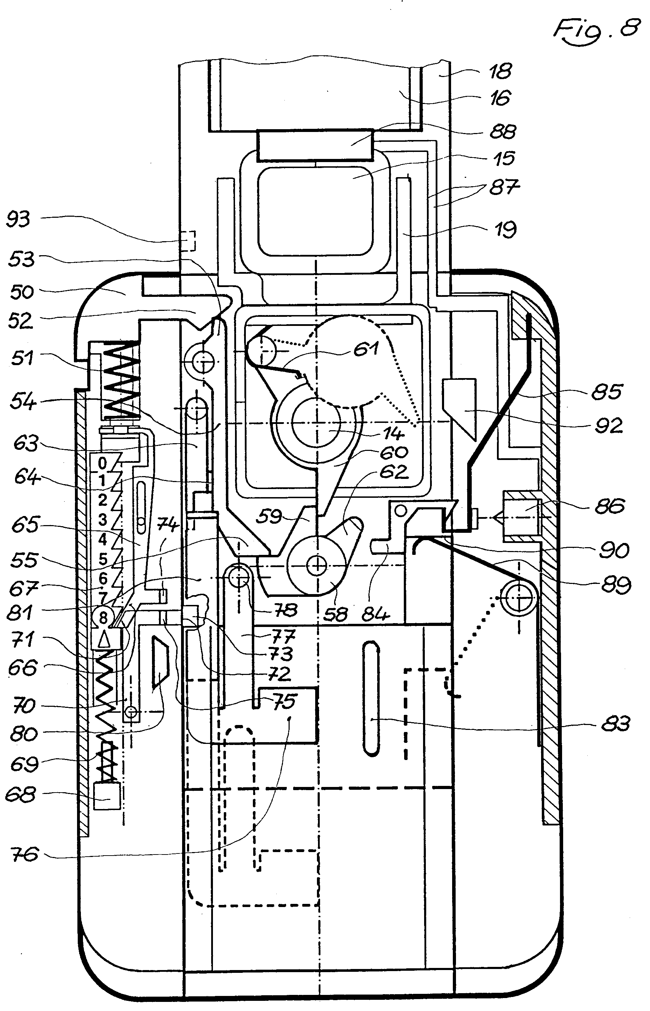

As mentioned above, the construction and arrangement of film cassette 10 arranged replaceably on body shell 12 will be described below with reference to Figs. 6 and 7:

According to them, film cassette 10 consists of a flat, parallelepipedal housing 20 in which a continuous film channel 21 is provided. Film channel 21 is constituted by two longitudinal sections 21a and 21b extending parallel to one another, as well as semicircular sections 21c and 21d joining their ends.

Parallel to section 21a of film channel 21, housing 20 has an outer wall 22 in which a flat guideway 23 associated with camera-side flat guideway 17 is configured. Parallel to section 21b of film channel 21, housing 20 has an outer wall 45. In addition, an exposure window 24 communicating with film channel section 21a is present in outer wall 22. Provided between film channel section 21a and exposure window 24 is a recess 25 extending over the latter, in which a spring-loaded shutter panel 26 is mounted longitudinally displaceably to close off exposure window 24 when not joined to a camera. A pin 27 that interacts with a camera-side stop in order to open shutter panel 26 is mounted on shutter panel 26. Provided in outer wall 22 of film cassette 10 that faces the camera are two parallel elongated slots 42 which allow a camera-side film gripper 76 to pass through the film perforation of film strip 37 in order to transport it. Pin 27 moves in one of elongated slots 42.

The inner walls of film channel 21 are constituted by a web 28 that, for reasons related to injection molding, is configured as a hollow web.

In order to form a film mouth 44, a wall section 29 of housing 20 is arranged in the region of semicircular film channel section 21d, separated from outer wall 22 and configured as a film hinge by the fact that a constriction 30 is provided in that wall section 29. The free end of wall section 29 is configured as a lip and rests, in light-tight fashion and under elastic preload, against a projection 31 of outer wall 22.

Lastly, web 28 is equipped, opposite exposure window 24, with an opening 32. A film pressure spring 33, which is braced on the one hand by means of a pressure plate 34 against the inside of outer wall 22 and on the other hand by means of spring feet 35 in a socket 36 configured in web 28, projects through this opening 32.

In order to introduce an unexposed packaged film strip 37 of predetermined length through film mouth 44 into film cassette 10, a transfer shoe 38 serving as auxiliary tool is introduced between outer wall 22 and film hinge-like wall section 29, the latter deflecting elastically. Film strip 37 is inserted automatically through this transfer shoe 38 into the film channel of cassette 10 until film strip 37 completely fills film channel 21.

When film cassette 10 is attached onto subminiature camera 11, shutter panel 26 is pulled back by pin 27 so that exposure window 24 is open and film strip 37 is protected from incident light only by shutter blade 60.

Removal of exposed film strip 37 from film cassette 10 is also accomplished automatically through film mouth 44 in that with transfer shoe 38 inserted between outer wall 22 and elastic film hinge-like wall section 29, film strip 37 is grasped in its perforation by means of a gripper hook 41 and pulled out of film cassette 10.

The individual film strips are then adhesively attached to one another, the beginning of one film strip being adhesively attached to the end of the preceding film strip.

The camera operates as follows:

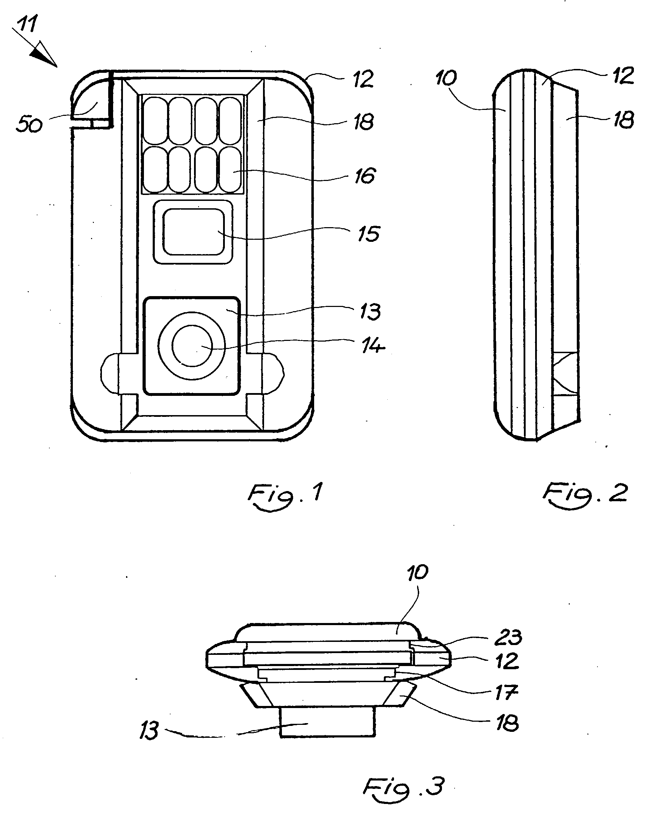

Lens slide 18 is initially in its non-operating position, and a film cassette 10 loaded with film strip 37 is attached to body shell 12 via flat guideway 23, as depicted in Figs. 1 to 3.

In order to take a picture, lens slide 18 is displaced manually into its taking position, as depicted in Figs. 4 and 5.

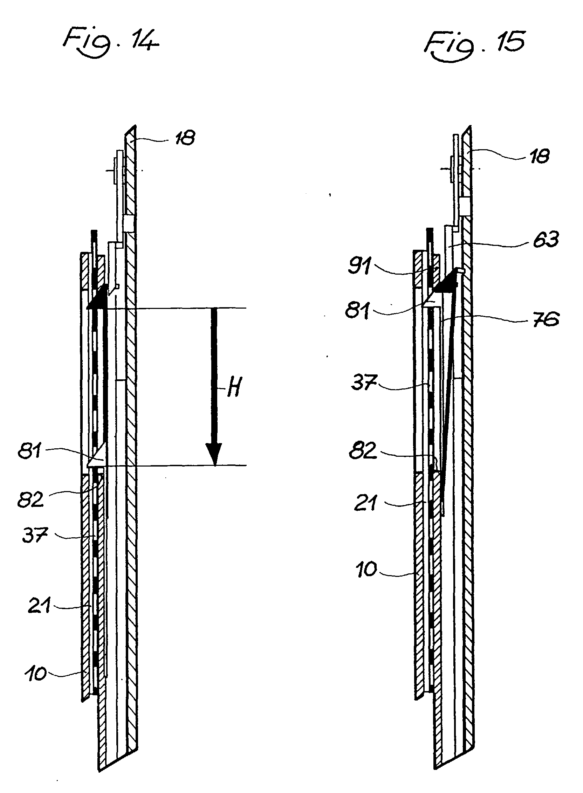

In the process, leg spring 89, initially resting against the side surface of lens slide 18, passes under shoulder 90 and, as a result of its spring force, assists lens slide 18 in sliding out. At the same time, snap ball 78 of film gripper 76 snaps into snap recess 79 of lens slide 18, and film gripper 76 is carried along (see Fig. 10), its gripper tooth 81 engaging through elongated slot 42 in film cassette 10 and sliding over the perforation of film strip 37. When the taking position has been reached, film gripper 76 is lifted out of the perforation by a slanted surface 91 configured on film cassette 10 and held in that position by retaining lever 63, as shown by Fig. 15.

At the same time, lens carrier 13 mounted in lens slide 18 is brought into its taking position by passing, against the force of return spring 19, over ramp 39 onto support surface 40.

In this condition the camera is ready to take a picture.

In order to take a photograph, release button 50 is pushed down against the force of return spring 51. This causes release pawl 54 to be pivoted by projection 52 until arm 55 moves away from surface 56 of impact lever 58, and the latter proceeds clockwise as a result of the force of drive spring 57, opens shutter blade 60 against the force of torsion spring 61, and uncovers lens 14 to expose film strip 37.

At the same time, cam 62 of impact lever 58 runs against retaining pawl 84 and pivots it, so that firing spring 85 strikes piezo block 86 and fires a flash lamp.

The pivoting of release pawl 54 also pivots retaining lever 63 via lobe 64, and releases film gripper 76 so that gripper tooth 81 drops into the film perforation (see Fig. 14).

When release button 50 is pushed down, counter bar 67 is moved one tooth, or one digit, by counter lever 65. In this process, pawl-shaped lug 71 of detent pawl 70 moves one tooth farther as the latter pivots. During pivoting, end surface 72 of detent pawl 70 temporarily penetrates into cutout 73 provided on lens slide 18.

In order to prepare for the next picture, lens slide 18 is displaced toward the non-operating position until gripper tooth 81 strikes against stop shoulder 82 in film cassette 10. Film strip 37 is thereby transported one frame interval H. Film gripper 76 remains in snap-locked engagement with lens slide 18. At the same time cam 62 runs against stop 83, and impact lever 58 is rotated once again into its spring-preloaded cocked position in which it is retained by release pawl 54 that is pivoted back. A return element 92 ensures that firing spring 85 is once again held by retaining pawl 84 in the preloaded firing position.

Retaining lever 63 follows along as release pawl 54 pivots back, so that when lens slide 18 is once again in the taking position, gripper tooth 81 of film gripper 76 is lifted away from the film perforation by means of slanted surface 91. If no picture is taken in this position, but instead lens slide 18 is displaced into the non-operating position, film strip 37 is not transported.

If a further picture is taken, the operations again proceed as described.

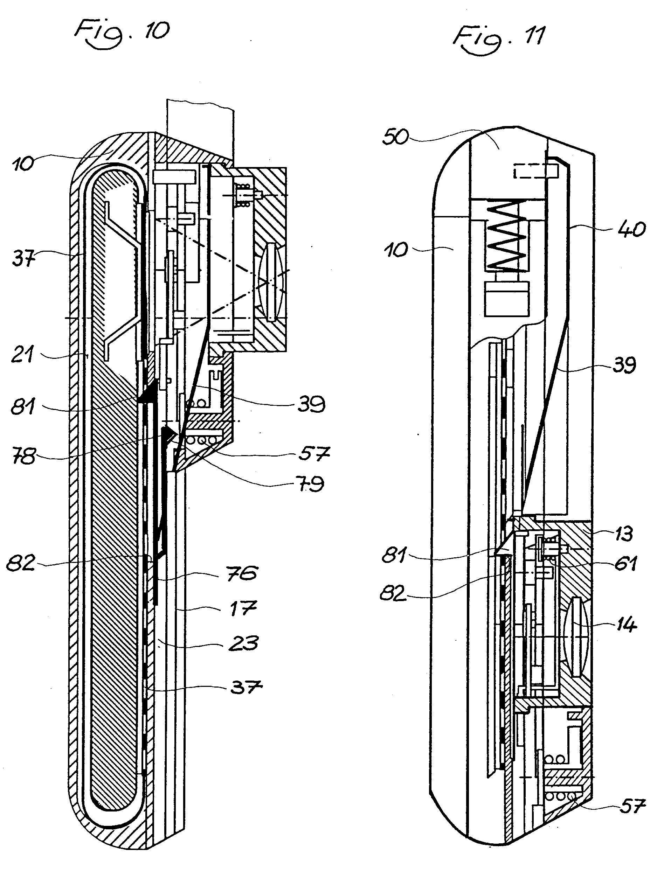

If no further picture is taken, and the camera is brought into the non-operating position, film gripper 76 is carried along until its gripper tooth 81 contacts stop shoulder 82 and is prevented by it from moving farther. The result of this is that the snap-in connection between snap ball 78 of film gripper 76 and snap recess 79 of lens slide 18 is abolished, and the latter, released from film gripper 76, is moved into its non-operating position. Lens carrier 13 is returned via ramp 39 into its pulled-in position as shown in Figs. 11 and 12.

When all eight frames of film strip 37 in film cassette 10 have been completely exposed, the latter is removed from body shell 12. In the process, shutter panel 26 is slid by means of pin 27 in front of exposure window 24, and the counter is set to zero. This zero position occurs by the fact that slide 80 disengages counter lever 65 and detent pawl 70 from counter bar 67 by means of hooks 74 and 75, and compression spring 69 pushes counter bar 67 back into its starting position. During this movement, with lens slide 18 in its non-operating position, detent pawl 70 penetrates with its end surface 72 into cutout 93 provided on the lens slide.

If lens slide 18 is not exactly in its taking position, end surface 72 of detent pawl 70 is not located exactly over cutout 73, but rather rests against the end surface of lens slide 18. This makes it impossible to actuate the camera.

## Claims

1. Photographic camera of small, flat design, consisting of a body shell, a taking lens, a viewfinder, a film chamber, film transport means, and a flash device, **characterized in that** the body shell (12) is configured parallelepipedally and has on its front side a linear flat guideway (17) in which a lens slide (18) is guided displaceably from a non-operating position into a taking position and for purposes of film transport; and that the film chamber (10) is arranged on the back side of the body shell (12).

2. Photographic camera as defined in Claim 1, characterized in that the body shell (12) has a linear flat guideway (23) on the back side; and that the film chamber is configured as a replaceable film cassette (10) and is displaceably guided in the flat guideway (23).

3. Photographic camera as defined in Claims 1 and 2, characterized in that the lens slide (18) is displaceable from the non-operating position into the taking position and is held in the latter; and that in the taking position the viewfinder (15) is uncovered and the lens (14) is in the taking position.

4. Photographic camera as defined in Claims 1 to 3, characterized in that a lens carrier (13) receiving the lens (14) is guided in the lens slide (18) perpendicular to the movement direction of the lens slide (18), and is movable from a non-operating position into a taking position and vice versa.

5. Photographic camera as defined in Claims 1 to 4, characterized in that a flash arrangement (16) is provided above the lens (14) and the viewfinder (15) on the lens slide (18).

6. Photographic camera as defined in one of Claims 1 to 5, characterized in that a leg spring (89), whose one leg is braced against the body shell (12) and whose other leg rests against a side surface of the lens slide (18) under preload and, when the lens slide (18) is moved from the non-operating position into the taking position, engages beneath a shoulder (90) configured thereon and lying transverse to the movement direction of the lens slide (18), is arranged in the body shell (12).

7. Photographic camera as defined in one of Claims 1 to 6, characterized in that a support surface for the lens carrier (13) in its rest position, which transitions via a ramp (39) configured as an oblique plane into a support surface (40) for the lens carrier in its taking position, is provided in the body shell (12); and that a return spring (19) held on the body shell side engages on the lens carrier (13) and pushes it onto the support surface (40) and the ramp (39).

8. Photographic camera as defined in one of Claims 1 to 7, characterized in that in the body shell, a film gripper (76) is guided longitudinally displaceably in the movement direction of the lens slide (18) and is releasably joined to the lens slide (18) by means of a snap connection (78, 79).

9. Photographic camera as defined in Claim 8, characterized in that configured on the film gripper (76) is a spring arm (77) on whose free end sits a snap cone (78) or a snap ball that engages into a snap recess (79) configured on the lens slide (18).

10. Photographic camera as defined in Claim 9, characterized in that the film gripper (76) passes through an elongated slot (42) in film cassette (10) and engages into the film perforation; and that the elongated slot (42) has a stop shoulder (82) against which the gripper tooth (81) comes to rest after one frame stroke of the lens slide (18); and that the film gripper (76) is thereby immobilized.

11. Photographic camera as defined in Claims 9 and 10, characterized in that when the lens slide (18) is moved out one frame stroke (H) into the non-operating position, the snap connection (78, 79) can be released from the lens slide (18), and can be snapped back into place when the lens slide (18) is moved into its taking position.

12. Photographic camera as defined in one of Claims 1 to 11, characterized in that a release button (50), movable parallel to the lens slide (18), that engages during the release operation onto a two-armed release pawl (54), mounted in the lens slide (18), that rests with one arm (55) on an impact lever (58) for a shutter blade (60), is provided laterally on the body shell; and that a retaining lever (63), also mounted on the lens slide (18), rests under spring preload against the impact lever-side arm (55) of the release pawl (54).

13. Photographic camera as defined in one of Claims 1 to 12, characterized in that after film transport has occurred and with the lens slide (18) in the taking position, the film gripper (76) is held by the retaining lever (63) outside the film perforation.

14. Photographic camera as defined in Claim 13, characterized in that when the impact lever (58) is released, the retaining lever (63) is pivotable by means of the release pawl (54) out of the region of the film gripper (76).

15. Photographic camera as defined in one of Claims 1 to 14, characterized in that a counter lever (65) extending approximately parallel to the lens slide (18), movable longitudinally with the release button (50), and pivotable transversely to that direction, which engages with a pawl (66) configured at its free end into the teeth of a counter bar (67), is arranged on the release button (50).

16. Photographic camera as defined in Claim 15, characterized in that a detent pawl (70), which on the one hand engages by means of a pawl-shaped lug (71) into the teeth of the counter bar (67) and on the other hand lies with an end surface (72) at a short distance opposite a side surface of the lens slide (18), is pivotedly mounted in the body shell (12).

17. Photographic camera as defined in Claims 15 and 16, characterized in that the lens slide (18) has, in the side wall, cutouts (73 and 93) which are located opposite the detent pawl (70) when the lens slide is in the taking position and the non-operating position, respectively.

18. Photographic camera as defined in Claims 1 and 15 to 17, characterized in that a gate (80), which when the film cassette is changed holds the counter lever (65) and the detent pawl (70) out of engagement with the counter bar (67), is provided on the film cassette (10).

19. Photographic camera as defined in Claims 1, 5, and 12, characterized in that the impact lever (58) [has], in addition to the surface (56), an impact arm (59) for the shutter blade (60) and a cam (62) for a retaining pawl (84), holding a firing spring (85), with which a piezo block (86) for the flash arrangement (16) is associated.

20. Photographic camera as defined in Claims 1, 5, 12, and 19, characterized in that a stop (83) which, when the lens slide (18) is displaced for the purpose of film transport, engages on the cam (62) in such a way that the impact lever (58) returns to its starting position in which the release pawl (54) is resting on the surface (56), is provided in the body shell (12).

21. Film cassette for a photographic camera to receive a film strip equipped with an edge perforation, consisting of a flat, parallelepipedal housing with an exposure window and a film mouth, characterized in that configured in the housing (20) is a circumferential, continuous film channel (21) extending in the longitudinal direction thereof, which passes by the exposure window (24) and opens into the film mouth (44).

22. Film cassette as defined in Claim 21, characterized in that the film channel (21) consists of two straight sections (21a and 21b) running parallel to one another, whose ends are joined by means of semicircular sections (21c and 21d).

23. Film cassette as defined in Claims 21 and 22, characterized in that the film channel (21) is constituted by the outer walls (22, 45) and the semicircular wall sections (29 and 46) of the housing (20) and a web (28) configured in the housing.

24. Film cassette as defined in Claims 21 to 23, characterized in that in the outer wall (22) on the exposure window side, at least one elongated slot (42) extending in the movement direction of the film strip (37) is present for passage of a camera-side film gripper (76).

25. Film cassette as defined in Claim 21, characterized in that the film mouth (44) is arranged in a region in which the semicircular wall section (29) meets the outer wall (22).

26. Film cassette as defined in Claims 21 and 25, characterized in that the semicircular wall section (29) is joined to the outer wall (45) of the housing and is arranged separately from the opposite outer wall (22); and that it rests with its free end against the outer wall (22) under elastic preload and constitutes the film mouth (44).
